# EUROPEAN PATENT APPLICATION

(11) **EP 2 610 098 A1**
(43) Date of publication of application: **03.07.2013**
(21) Application number: 11819865.4
(22) Date of filing: 19.08.2011
(51) Int. Cl.: B60K 35/00, B60K 37/06, B60R 16/02, G06F 3/048

(54) **OPERATING DEVICE FOR VEHICLE**

(30) Priority: 26.08.2010 JP 2010189722
(71) Applicant: Honda Motor Co., Ltd., Minato-ku Tokyo 107-8556 (JP)
(72) Inventor: ONAKA Junichiro, Wako-shi Saitama 351-0193 (JP); KUBOTA Masatoshi, Wako-shi Saitama 351-0193 (JP)
(74) Representative: Herzog, Markus
(86) International application number: PCT/JP2011/068766
(87) International publication number: WO 2012/026402

(57) **Abstract**

An operating device which is for a vehicle and wherein: a first peripheral border is set to correspond with the relative positional relationship in which a plurality of switches are arranged; and a prescribed position is set such that, in a state wherein an image is stopped in the prescribed position in a display screen, the gap between a first edge of the image and the first peripheral border of the display screen, in the movement direction of the image, is not as big as the gap between a second edge of the image, which is on the opposite side to the first edge, and a second peripheral border of the display screen, in the movement direction.

## Description

### Technical Field

The present invention relates to an operating device for a vehicle.
Priority is claimed on Japanese Patent Application No. 2010-189722, filed August 26, 2010, the content of which is incorporated herein by reference.

### Background Art

Conventionally, for example, there is known a display device for a vehicle that makes it easy to recognize the correspondence between a map image before display of a menu image and the menu image by displaying the menu image by vertical division into two parts such that the map image is pushed out from the top of the screen to the bottom if a menu display switch is operated by an operator in a state where the map image is displayed on a display (for example, refer to Patent Document 1).
In this display device for a vehicle, if a switch for a fellow passenger is operated, the push-out direction of the map image and the image arrangement caused by division into two parts are inverted and displayed.

### Citation List

### Patent Literature

[Patent Document 1] Japanese Unexamined Patent Application, First Publication No. 2002-340600
[Patent Document 2] Japanese Unexamined Patent Application, First Publication No. 2000-249568

### Summary of Invention

### Technical Problem

Incidentally, according to the display device for a vehicle related to the above Patent Document 1, the map image and the menu image are merely displayed by division of the screen into two parts. If the operator does not visually recognize the screen while the push-out display is performed, a problem occurs in that the correspondence (that is, transition of the screen) before and after the display of the menu image cannot be recognized. Additionally, since the arrangement of the menu display switch and the switch for a fellow passenger is not associated with the push-out direction of or two-division position of the map image, a problem occurs in that it is not possible to intuitively grasp whether display of the display device is in the state of being caused by operating a certain switch.

Additionally, according to the apparatus additionally related to above Patent Document 2, display subsampling is performed when the scrolling display is performed. Therefore, there is a problem in that the operator cannot visually recognize subsampled items, and convenience is impaired.

The invention has been made in view of the above circumstances, and an object thereof is to provide an operating device for a vehicle that can make an operator instantaneously recognize that menu display is caused by operating of a certain switch. Moreover, another object of the invention is to provide an operating device for a vehicle that can improve convenience of scrolling display.

### Solution to Problem

The invention has adopted the following means in order to solve the above problems and achieve the relevant object.
That is, an operating device for a vehicle related to a first aspect of the invention includes vehicle-mounted equipment mounted on a vehicle having an operation menu; a display screen that displays an image of the operation menu; a plurality of switches that is arranged in a vehicle interior and operates the operation menu; and display control device that displays the image so that the image stops at a predetermined position after the image is made to move on the display screen from a first peripheral edge of the display screen toward the predetermined position according to the operation of any of the plurality of switches. The first peripheral edge is set so as to correspond to a relative positional relationship in which the plurality of switches is arranged, and the predetermined position is set so that a gap between a second end opposite a first end of the image and a second peripheral edge of the display screen in a movement direction of the image is larger than a gap between the first end of the image and the first peripheral edge of the display screen in the movement direction of the image, in a state where the image stops at the predetermined position on the display screen.

Moreover, in the operating device for a vehicle related to a second aspect of the invention, a position of the first end of the image of the operation menu and a position of the first peripheral edge of the display screen may be the same in a state where the image stops at the predetermined position on the display screen.

Moreover, in the operating device for a vehicle related to a third aspect of the invention, the image of the operation menu may be displayed so that only the first end among ends framing the overall image of the operation menu is in contact with the first peripheral edge of the display screen, in a state where the image stops at the predetermined position on the display screen.

Moreover, in the operating device for a vehicle related to a fourth aspect of the invention, the plurality of switches may include a left-hand steering switch provided on the left side of a rotational axis of a steering wheel provided in the vehicle interior, and a right-hand steering switch provided on the right side of the rotational axis of the steering wheel. The first end may be set at a left end of the display screen in a case where the left-hand steering switch is operated, and the first end may be set at a right end of the display screen in a case where the right-hand steering switch is operated.

Moreover, in the operating device for a vehicle related to a fifth aspect of the invention, the image includes an operation item image and an item frame image surrounding the operation item image, when the image is made to be displayed on the display screen, the display control device makes only the item frame image of the image move from the first peripheral edge of the display screen toward the predetermined position, and makes the operation item image displayed after the item frame image stops at the predetermined position.

### Advantageous Effects of Invention

According to the operating device for a vehicle related to the first aspect of the invention, when the image of the operation menu is displayed on the display screen, the image of the operation menu is made to slide from a direction corresponding to the arrangement position of the switch and displayed (slide display). Thereby, an operator can intuitively grasp whether the screen display is switched by a certain switch being operated.
Additionally, the position where the image of the operation menu stops on the display screen is changed according to the slide-in direction of the image according to the position of the operated switch. Thereby, even in a case where the operator has not visually recognized the slide display or even in a case where some time has passed from the switch operation, the operator can be made to recognize that the image of the operation menu that is currently displayed has been displayed by the operation of a certain switch at a glance.
The position where the image of the operation menu stops is changed to, for example, a position where the occupying position of the image of the operation menu on the display screen is deviated to the first peripheral edge side of the display screen, a position where an area occupied in a region on a predetermined direction side is larger than an area occupied in a region on the side opposite the predetermined direction, with respect to the area occupied by the image of the operation menu in a region on the first peripheral edge side from the center position of the display screen and the region of the second peripheral edge that is the side opposite the first peripheral edge, or the like. The area occupied is, for example, the area in each region when the region of the display screen is equally divided by a boundary line orthogonal to the movement direction of the image of the operation menu, or the like.

Moreover, according to the operating device for a vehicle related to the second aspect of the present invention, whether the image of the operation menu that is currently displayed is in the state of having moved from a certain direction (that is, whether the image of the operation menu is an image of the operation menu displayed by the operation of a certain switch) can be more easily recognized.

Moreover according to the operating device for a vehicle related to the third aspect of the present invention, even in case where the display screen is not visually recognized while the image of the operation menu is slidingly moved, whether the image of the operation menu that is currently displayed is in the state of having moved from a certain direction (that is, whether the image of the operation menu is an image of the operation menu displayed by the operation of a certain switch) can be discriminated, and convenience can be improved.

Moreover, according to the operating device for a vehicle related to the fourth aspect of the present invention, in a case where the switches are symmetrically attached to the steering wheel, an operator can more intuitively grasp whether the image of the operation menu that is displayed on the display screen is displayed by operating a certain switch, and operativity improves further.

Moreover, according to the operating device for a vehicle related to the fifth aspect of the present invention, occurrence of visual annoyance caused by the excess of information amount, when the image of the operation menu is made to be slidingly displayed, can be prevented while securing ease of recognition on whether screen display has been changed by operating a certain switch.

### Brief Description of the Drawings

FIG. 1 is a configuration view of an operating device for a vehicle related to a first embodiment of the present invention.
FIG. 2 is a view showing an arrangement example of a left-hand rotation operating member and a right-hand rotation operating member of the operating device for a vehicle.
FIG. 3 is a view showing an arrangement example of the left-hand rotation operating member and the right-hand rotation operating member of the operating device for a vehicle.
FIG. 4 is a view showing a display example of a display device accompanying the operation of the left-hand rotation operating member of the operating device for a vehicle.
FIG. 5 is a view showing a display example of a display device accompanying the operation of a left-hand rotation operating member of an operating device for a vehicle related to a first modified example of the first embodiment of the present invention.
FIG. 6 is a view showing a display example of a display device accompanying the operation of a left-hand rotation operating member of an operating device for a vehicle related to a second modified example of the first embodiment of the present invention.
FIG. 7 is a view showing a display example of a display device accompanying the operation of a left-hand rotation operating member of an operating device for a vehicle related to a third modified example of the first embodiment of the present invention.
FIG. 8 is a view showing a display example of a display device accompanying the operation of a left-hand rotation operating member of an operating device for a vehicle related to a fourth modified example of the first embodiment of the present invention.
FIG. 9 is a view showing a display example of a display device accompanying the operation of a left-hand rotation operating member of an operating device for a vehicle related to a fifth modified example of the first embodiment of the present invention.
FIG. 10 is a configuration view of an operating device for a vehicle related to a second embodiment of the present invention.
FIG. 11 is a view showing an arrangement example of a rotation operating member of the operating device for a vehicle.
FIG. 12 is a view showing an arrangement example of a rotation operating member of the operating device for a vehicle.
FIG. 13 is a view showing a display example of a display device accompanying the operation of the rotation operating member of the operating device for a vehicle.

### Description of Embodiments

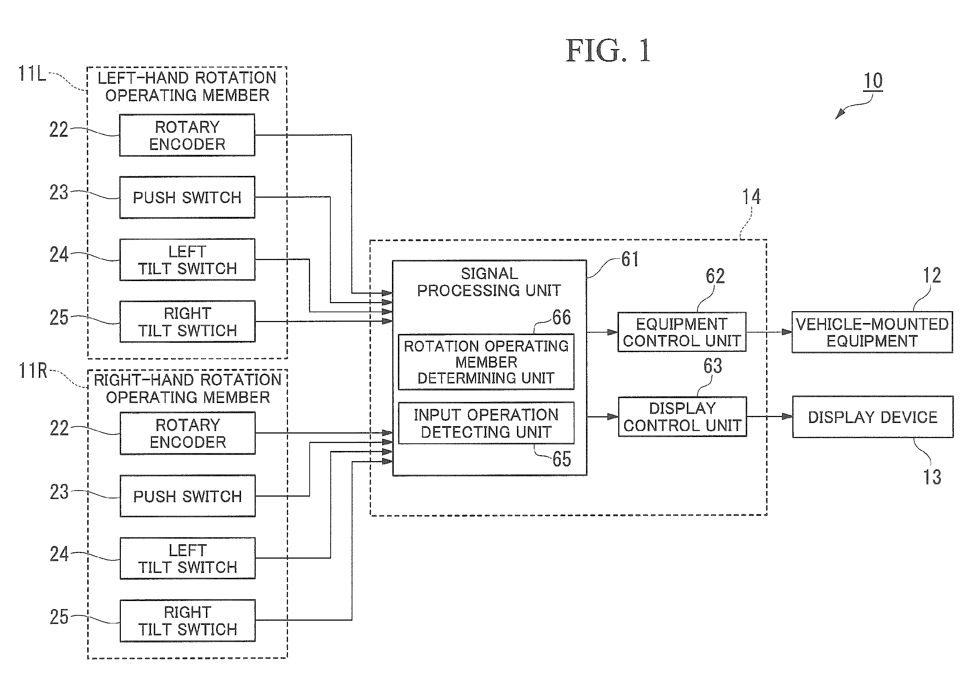

An operating device for a vehicle related to a first embodiment of the present invention will be described below, referring to the accompanying drawings.
As shown in FIG. 1, an operating device 10 for a vehicle according to the present embodiment, for example, is configured to include a left-hand rotation operating member 11L and a right-hand rotation operating member 11R that are capable of being operated by an operator, vehicle-mounted equipment 12, a display device 13, and a processing device 14.

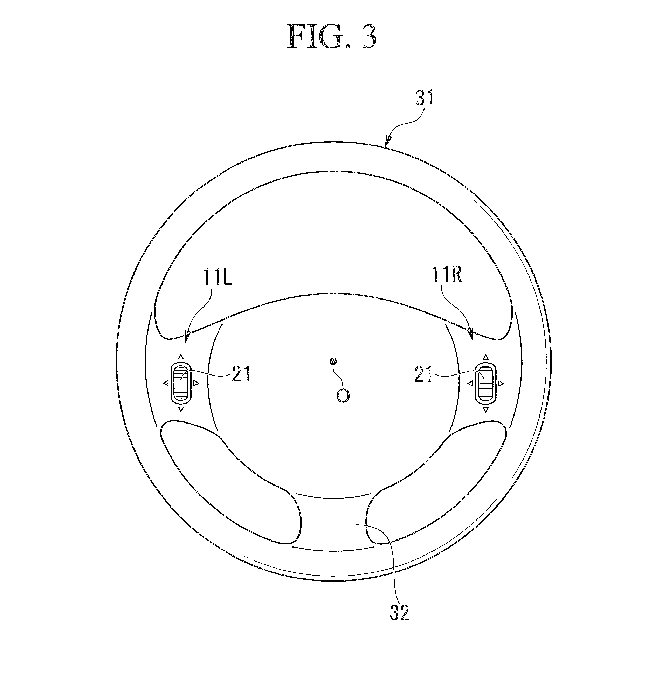

As shown in FIG. 3, the left-hand rotation operating member 11L and the right-hand rotation operating member 11R are, for example, rotary switches including rotary wheels 21 capable of performing a push operation and a tilt operation in addition to a rotation operation. The left-hand rotation operating member 11L and the right-hand rotation operating member 11R each are configured to include a rotary encoder 22, a push switch 23, a left tilt switch 24, and a right tilt switch 25.

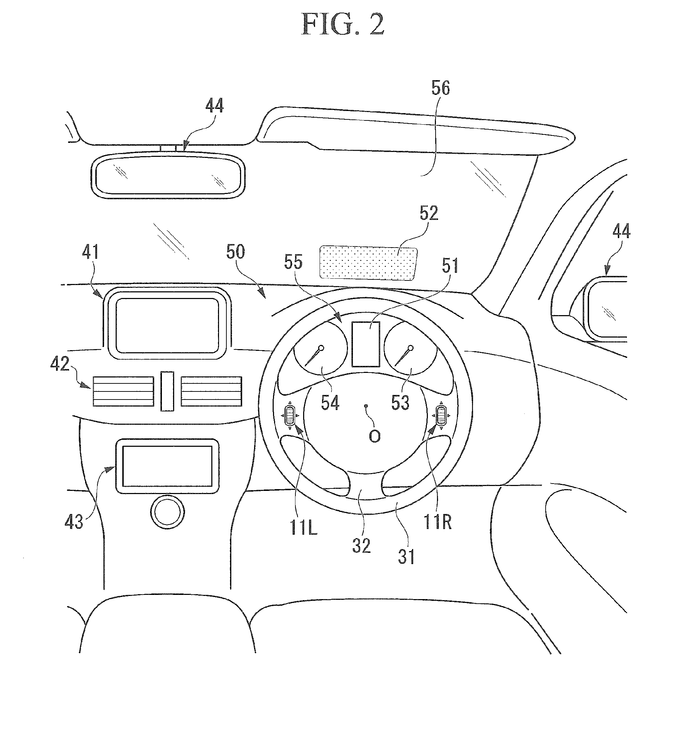

As shown in FIGS. 2 and 3, the left-hand rotation operating member 11L is, for example, a left-hand steering switch that is arranged at a left-hand position (for example, a position that is symmetrical with respect to a rotational axis O) of the rotational axis O of a steering wheel 31 in a spoke part 32 of the steering wheel 31 at a neutral position (that is, a position in the straight-ahead state of a vehicle). On the other hand, as shown in FIGS. 2 and 3, the right-hand rotation operating member 11R is, for example, a right-hand steering switch that is arranged at a right-hand position of the rotational axis O of the steering wheel 31 in the spoke part 32 of the steering wheel 31.
Additionally, in the present embodiment, the left-hand rotation operating member 11L and the right-hand rotation operating member 11R, for example, are arranged symmetrically with respect to the rotational axis O of the steering wheel 31. Also, the left hand rotation operating member and the right-hand rotation operating member are arranged within a positional range where the members can be operated by the fingers (for example, thumbs or the like) of the right and left hands of a driver who has gripped the steering wheel 31.

Portions of the outer peripheral portions of the rotary wheels 21 of the left-hand rotation operating member 11L and the right-hand rotation operating member 11R protrude toward the outside (that is, toward the driver) from the surface of the spoke part 32, and the operator can operate the rotary wheels 21 with his/her fingers. The rotary wheels 21, for example, are configured so as to be rotatable in the up-and-down direction of the steering wheel 31 at the neutral position, tiltable in the right-and-left direction of the steering wheel 31 at the neutral position, and pushable in the direction of rotational axis O.

The rotary encoder 22, for example, outputs a signal according to the rotational displacement, rotational angle, and rotational direction of the rotary wheel 21.
The push switch 23 outputs a signal according to the presence/absence of a push operation to the rotary wheel 21.
The left tilt switch 24 outputs a signal according to the presence/absence of a leftward tilt operation to the rotary wheel 21.
The right tilt switch 25 outputs a signal according to the presence/absence of a rightward tilt operation to the rotary wheel 21.

The vehicle-mounted equipment 12 is, for example, a navigation device 41, an air conditioner 42, an acoustic device 43, a mirror angle adjusting device 44 that adjusts the angle of a room mirror or a rearview mirror, a lighting device (not shown), a wiper (not shown), a dew condensation removing device (not shown), a drive assist device (not shown), a traveling safety device (not shown), or the like.

The display device 13 is, for example, an MID (Multi-Information Display) device 51, a HUD (HEAD-UP DISPLAY) device 52, or the like that is arranged at an instrument panel 50. The display device 13 is arranged so that the position thereof in the right-and-left direction of the vehicle becomes a position between the left-hand rotation operating member 11L and the right-hand rotation operating member 11R when viewed from the driver who has sat down on a driver's seat.

In addition, the MID device 51 is, for example, a liquid crystal display that is arranged at the central portion of a meter panel part 55 including meters and gauges, such as a vehicle speedometer 53 and an engine rpm meter 54, which are provided at the instrument panel 50 ahead of the driver's seat. Various kinds of vehicle information, including the travel distance of the vehicle, temperatures inside and outside a vehicle interior, fuel consumption information, the state of the vehicle, and the like, are displayed on the MID device 51.

Additionally, the HUD device 52, for example, projects and displays an image (for example, images, such as various kinds of vehicle information) on a portion of a windshield 56 ahead of the driver's seat, or displays as a virtual image an image (for example, images, such as various kinds of vehicle information) above the instrument panel 50 ahead of the driver's seat.

The processing device 14, for example, is configured to include a signal processing unit 61, an equipment control unit 62, and a display control unit 63.

The signal processing unit 61 acquires signals output from the rotary encoders 22 and the respective switches 23 to 25 of the left-hand rotation operating member 11L and the right-hand rotation operating member 11R, and detects operator's input operations to the respective rotation operating members 11L and 11R. The signal processing unit 61 outputs the signals of the detection results to the equipment control unit 62 and the display control unit 63.
The signal processing unit 61, for example, is configured to include an input operation detecting unit 65 and a rotation operating member determining unit 66.

The input operation detecting unit 65, for example, detects the rotational displacement, rotational angle, and rotational direction of the rotary wheels 21 on the basis of the signals output from the rotary encoders 22. The input operation detecting unit 65 detects the presence/absence of a push operation and a tilt operation in the right-and-left direction to the rotary wheels 21, on the basis of the signals output from the respective switches 23 to 25, and the signals of the detection results are output to the equipment control unit 62 and the display control unit 63.
The rotation operating member determining unit 66 determines that the operator has operated either the left-hand rotation operating member 11L or the right-hand rotation operating member 11R, and the signal of this determination result is output to the equipment control unit 62 and the display control unit 63.

The equipment control unit 62 outputs a command signal for controlling the operation of the vehicle-mounted equipment 12, according to the signals output from the input operation detecting unit 65 and the rotation operating member determining unit 66.
The display control unit 63 outputs a command signal for controlling the operation of the display device 13, according to the signals output from the input operation detecting unit 65 and the rotation operating member determining unit 66.

For example, the vehicle-mounted equipment 12 that becomes a control target is selected by an operator's predetermined operation to the rotary wheel 21 of either the left-hand rotation operating member 11L or the right-hand rotation operating member 11R. If display of a plurality of operation items (operation menu) set in advance for the vehicle-mounted equipment 12 is instructed, the display control unit 63 makes an image of the operation menu of the selected vehicle-mounted equipment 12 displayed on a display screen of the display device 13.

At this time, the display control unit 63 makes the image of the operation menu move in a movement direction that goes from a predetermined direction of the display screen to a predetermined position on the display screen, according to whether either the left-hand rotation operating member 11L or the right-hand rotation operating member 11R is operated. Thereafter, the display control unit 63 makes the image of the operation menu displayed so as to stop at a predetermined position.

In addition, the predetermined direction of the display screen is set so as to correspond to a relative positional relationship in which the left-hand rotation operating member 11L and the right-hand rotation operating member 11R are arranged.
For example, in a case where the left-hand rotation operating member 11L is operated, a left-hand direction (for example, a direction that goes to a left edge 51L) in the right-and-left direction of a rectangular display screen is set to the predetermined direction. In a case where the right-hand rotation operating member 11R is operated, a right-hand direction (for example, a direction that goes to a right edge 51R) in the right-and-left direction of the rectangular display screen is set to the predetermined direction.

The predetermined position of the display screen is set so that the gap between an end, on the side opposite to a predetermined direction side, of the image of the operation menu in the movement direction and the peripheral edge of the display screen becomes larger than the gap (for example, zero or the like) between an end, on the predetermined direction side, of the image of the operation menu in the movement direction and the peripheral edge of the display screen, in a state where the image of the operation menu stops at a predetermined position on the display screen.

For example, in a case where the left-hand rotation operating member 11L is operated, the gap between the right end of the image of the operation menu and the right edge of the display screen is set to become larger than the gap between the left end of the image of the operation menu and the left edge 51L of the display screen. For example, in a case where the right-hand rotation operating member 11R is operated, the gap between the left end of the image of the operation menu and the left edge 51L of the display screen is set to become larger than the gap between the right end of the image of the operation menu and the right edge of the display screen.

In a case where the gap between the end, on the predetermined direction side, of the image of the operation menu in the movement direction and the peripheral edge of the display screen becomes zero, only the end on the predetermined direction side among ends framing the overall image of the operation menu is set so as to be in contact with the peripheral edge of the display screen, in a state where the image of the operation menu stops at a predetermined position on the display screen.

Additionally, the image of the operation menu is constituted by, for example, an operation item image, and an operation item image of an item frame surrounding operation items.
When the image of the operation menu is made to be displayed on the display screen, first, the display control unit 63 makes only the item frame image of the image of the operation menu move from a predetermined direction of the display screen toward a predetermined position. Next, the display control unit 63 makes the operation item image displayed after the item frame image stops at the predetermined position.

The operating device 10 for a vehicle according to the present embodiment includes the above configuration. Next, the operation of the operating device 10 for a vehicle, particularly the operation of the display control unit 63 will be described.

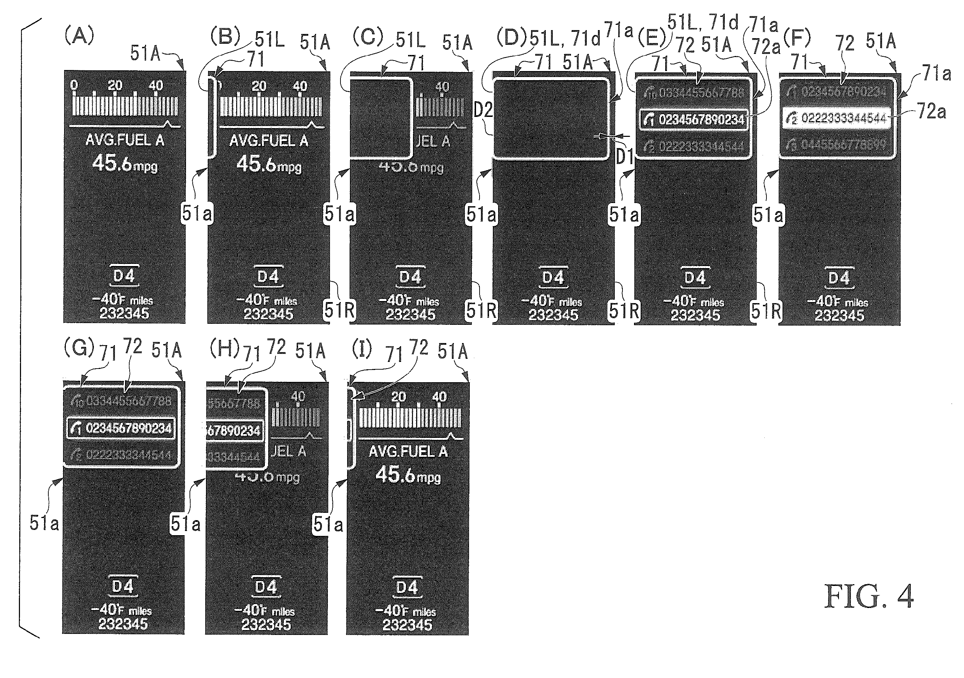

In addition, for example a case where an operator's predetermined operation is performed on the rotary wheel 21 of the left-hand rotation operating member 11L will be described below.
In this case, for example, the navigation device 41 is selected as the vehicle-mounted equipment 12 that becomes a control target. As shown in FIG 4(A) to FIG. 4(I), for example, an image of a plurality of telephone numbers capable of being selected at a call of a cellular phone unit (not shown) connected to the navigation device 41 is displayed on a display screen 51A of the MID device 51 as a plurality of operation items (operation menu) set in advance for the navigation device 41.

First, for example, as shown in FIG. 4(A), the display control unit 63, displays various kinds of information, such as fuel consumption per unit travel distance, total travel distance, and shift position, on the display screen 51A of the MID device 51, before the operator performs a predetermined operation on the left-hand rotation operating member 11L. The various kinds of information are displayed by preset display with predetermined normal luminance.

Next, if the operator performs a predetermined operation (that is, the operation of instructing the selection of the navigation device 41 that becomes a control target and the display of a plurality of operation items (operation menu) set in advance for the navigation device 41) on the left-hand rotation operating member 11L, for example, as sequentially shown in FIG. 4(B), FIG. 4(C), and FIG. 4(D), slide display is performed. This slide display means making only the item frame image 71 of the operation item image 72 and the operation frame image 71 of an operation frame surrounding operation items, which constitute the image of the operation menu, move (slide in) in a predetermined direction toward a predetermined position from the left edge (first peripheral edge) 51L or the right edge (second peripheral edge) 51R of the display screen 51A and displayed. The second peripheral edge 51R is the end opposite the first peripheral edge 51L.

The predetermined direction (that is, the slide-in direction) is a left-hand direction (for example, direction that goes to the left edge 51L) in the right-and-left direction of the display screen 51A.
Additionally, for example, as shown in FIG. 4(D), the gap interval D1 between a right end (second end) 71a of the item frame image 71 and the right edge (peripheral edge) 51R of the display screen 51A in the right-and-left direction that is the movement direction is larger than the gap interval D2 between a left end 71d (first end) of the item frame image 71, and the left edge (peripheral edge) 51L of the display screen 51A. That is, the predetermined position is a position where the gap interval D1 becomes larger than the gap interval D2 (zero in the present embodiment). Additionally, the position of the left end 71d is the same as the position of the left edge 51L.
Additionally, the item frame image 71 is, for example, an image of a rectangular shape with rounded comers or the like, which has a dark gray background color and has a white peripheral edge.
Additionally, the operation item image 72 is, for example, an image that has the same background color as the background color of the item frame image 71 and has telephone numbers in white or thin gray.

If this slide display is started, the luminance of preset display (for example, display of fuel consumption per unit travel distance) 51a in a region (for example, a peripheral region or the like where the item frame image 71 moves) where the item frame image 71 interferes is gradually reduced to a predetermined value or lower from normal luminance, in the preset display of being displayed on the display screen 51A from before this slide display.
Then, the preset display 51A is replaced with the item frame image 71 in a region where the item frame image 71 overlaps the preset display 51a, with the movement (slide in) of the item frame image 71 on the display screen 51A. Thereby, the region to be replaced with the item frame image 71 in the preset display 51a increases gradually.

Next, for example, as shown in FIG. 4(E), the operation item image 72 is displayed after the item frame image 71 is stopped at a predetermined position.
The operation item image 72 is movable between a plurality of operation items according to a predetermined operation to the left-hand rotation operating member 11L, and has a selection instruction image 72a capable of displaying the selective state (presence/absence of selection) of each operation item with the presence/absence of highlighting or the like. The highlighting using the selection instruction image 72a is, for example, the display of a frame surrounding a telephone number, and the display in which the display color of a telephone number is white that is different from thin gray that is a display color of other telephone numbers. Here, the predetermined operation is, for example, a rotation operation to the rotary wheel 21 or the like. The operation items are a plurality of selectable telephone numbers.

Next, if selection settlement of any one operation item from a plurality of operation items (that is, a plurality of selectable telephone numbers) is instructed according to a predetermined operation (for example, a push operation to the rotary wheel 21 or the like) to the left-hand rotation operating member 11L, for example, as shown in FIG. 4(F), the display color of the operation item selected by the highlighting using the selection instruction image 72a is reversed and displayed at this time. That is, the background color is changed to white from dark gray, and the telephone number is changed in dark gray from white. Thereby, display is changed to the state of selection settlement where an appropriate operation item is selected from the state where any of a plurality of operation items can be selected.

Next, if an operator's predetermined operation to the left-hand rotation operating member 11L is completed, for example, as sequentially shown in FIG. 4(G), FIG. 4(H), and FIG. 4(I), the operation item image 72 and the item frame image 71 of an item frame surrounding operation items, which constitute the image of the operation menu, are made to move (slide out) from a predetermined position of the display screen 51A toward the left edge 51L to perform slide display. That is, the slide-out direction is a direction that goes to a left-hand direction in the right-and-left direction of the display screen 51A, for example, the left edge 51L, in the present embodiment.

At this time, luminance is reduced to a predetermined value or lower with the start of movement (slide in) of the item frame image 71 on the display screen 51A. That is, the luminance of the preset display (for example, display of fuel consumption per unit travel distance) 51a in a region (for example, a peripheral region or the like where the item frame image 71 moves) on the display screen 51A where the item frame image 71 interferes is gradually increased to the normal luminance.
Then, the overlap of the item frame image 71 with the preset display (for example, the display of fuel consumption per unit travel distance) 51a is gradually released, with the movement (slide out) of the item frame image 71 on the display screen 51A. Finally, the display screen 51A returns to the preset display 51a with the normal luminance that has no overlap of the item frame image 71.

As described above, according to the operating device 10 for a vehicle according to the present embodiment, when the image of the operation menu is displayed on the display screen 51A, the image of the operation menu is made to slide from a direction corresponding to the arrangement position of the left-hand rotation operating member 11L or the right-hand rotation operating member 11R and displayed (slide display). Thereby, by operating either the left-hand rotation operating member 11L or the right-hand rotation operating member 11R, an operator can be made to intuitively grasp whether screen display is switched.

Additionally, although the first end is the left edge 51L, the first end is set so as to correspond to a relative positional relationship in which a plurality of switches (the right-hand rotation operating member 11R and the left-hand rotation operating member 11L) is arranged. Accordingly, in a case where the operator operates the right-hand rotation operating member 11R, the first end is the right edge 51R.
Additionally, the position where the image of the operation menu stops on the display screen 51A in the slide display is changed according to the slide-in direction of the image according to the position of the operated left-hand rotation operating member 11L or the right-hand rotation operating member 11R. Thereby, even in a case where the operator has not visually recognized the slide display or even in a case where some time has passed from the operation of the left-hand rotation operating member 11L or the right-hand rotation operating member 11R, the operator can be made to recognize that the image of the operation menu that is currently displayed has been displayed by the operation of any of the rotation operating members 11L and 11R at a glance.
The position where the image of the operation menu stops is changed to, for example, a position where the occupying position of the image of the operation menu on the display screen 51A is deviated to the first end (the left edge 51L in the present embodiment) side of the display screen 51A, a position where the area occupied in a region on the first end side becomes larger than the area occupied in a region on the side opposite the first end, with respect to the area occupied by the image of the operation menu in a region on the first end side from the center position of the display screen 51A and in a region on the side (second end) opposite the first end, or the like. Here, the area occupied is, for example, the area occupied in each region when the region of the display screen 51A is equally divided by a boundary line orthogonal to the movement direction of the image of the operation menu, or the like.

Moreover, the position of the left end 71d of the image of the operation menu and the position of the left edge 51L of the display screen 51A are the same. In other words, the gap D2 between the left end 71d of the image of the operation menu and the left edge 51L of the display screen 51A is zero in a state where the image of the operation menu stops at a predetermined position on the display screen 51A. Thereby, whether the image of the operation menu that is currently displayed is in the state of having moved from a certain direction (that is, whether the image of the operation menu is an image of the operation menu displayed by the operation of any of the left-hand rotation operating member 11L or the right-hand rotation operating member 11R) can be more easily recognized.

Moreover, in a state where the image of the operation menu stops at a predetermined position on the display screen 51A, only an end on a predetermined direction side among ends framing the overall image of the operation menu is in contact with the peripheral edge of the display screen 51A. Accordingly, even in a case where the operator has not visually recognized the display screen 51A while the image of the operation menu moves slidingly, the operator can be made to distinguish whether the image of the operation menu that is currently displayed is in the state of having moved from a certain direction. That is, the operator can distinguish whether the operation menu is an operation menu displayed by the operation of a certain switch. Moreover, convenience can be improved.

Moreover, the display device 13 is arranged so that the position thereof in the right-and-left direction of the vehicle becomes a position between the left-hand rotation operating member 11L and the right-hand rotation operating member 11R when viewed from a driver who has sat down on a driver's seat. In a case where the left-hand rotation operating member 11L is operated, the image of the operation menu slides in from the left side of the display screen 51A and stops with a predetermined gap being left with respect to the right edge of the display screen 51A. In a case where the right-hand rotation operating member 11R is operated, the image of the operation menu slides in from the right side of the display screen 51A and stops with a predetermined gap being left with respect to the left edge 51L of the display screen 51A. Thereby, the operator can be made to more intuitively grasp whether an image of the operation menu that is displayed on the display screen 51A is displayed by operating either the left-hand rotation operating member 11L or the right-hand rotation operating member 11R, and operativity improves further.

Moreover, the operation item image 72 is displayed after the item frame image 71 is stopped at a predetermined position. Thereby, occurrence of visual annoyance caused by the excess of information amount when the image of the operation menu is made to be slidingly displayed can be prevented while securing ease of recognition on whether screen display has been changed by operating either the left-hand rotation operating member 11L or the right-hand rotation operating member 11R.

In addition, in the above-described embodiment, the operation item image 72 is displayed after the item frame image 71 is stopped at a predetermined position. However, the present invention is not limited to this. For example, fade-in display may be performed by gradually increasing the luminance, contrast, or color saturation of the operation item image 72 from a lower limit (for example, zero or the like) to a specified value after the item frame image 71 is stopped at a predetermined position.
Hereinafter, in this first modified example, similarly to the above-described embodiment, for example a case where an operator's predetermined operation is performed on the rotary wheel 21 of the left-hand rotation operating member 11L will be described below.

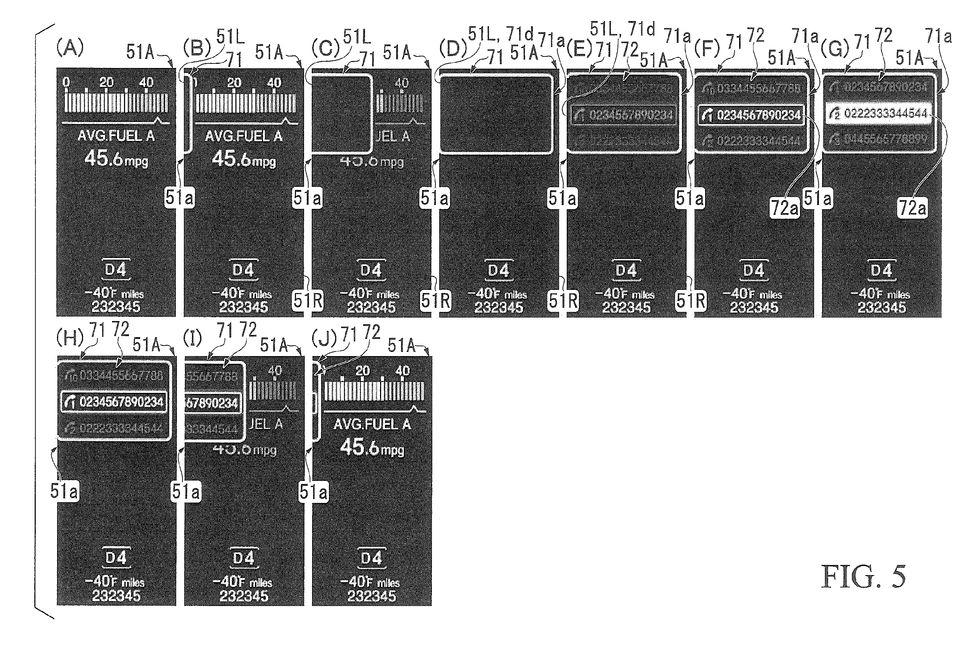

First, for example, as shown in FIG. 5(A) to FIG. 5(D), the display control unit 63 executes the same operation as the operation corresponding to FIG. 4(A) to FIG. 4(D) in the above-described embodiment.
Next, for example, as sequentially shown in FIG. 5(E) and FIG. 5(F), the operation item image 72 is displayed by fade-in by gradually increasing the luminance, contrast, or color saturation of the operation item image 72 from a lower limit (for example, zero or the like) to a specified value after the item frame image 71 is stopped at a predetermined position.
Then, after the luminance, contrast, or color saturation of the operation item image 72 has reached a predetermined specified value, for example, as shown in FIG. 5(F) to FIG. 5(J), the same operation as the operation corresponding to FIG. 4(E) to FIG 4(I) in the above-described embodiment is executed.

In addition, in the above-described embodiment, the operation item image 72 is displayed after only the item frame image 71 is slidingly displayed and stopped at a predetermined position. However, the present invention is not limited to this. For example, the luminance, contrast, or color saturation of the operation item image 72 may be increased to a specified value after the item frame image 71, and the visually recognizable operation item image 72 of which the luminance, contrast, or color saturation is made to be lower than a predetermined specified value are slidingly displayed and stopped at a predetermined position.
Hereinafter, in this second modified example, similarly to the above-described embodiment, for example a case where an operator's predetermined operation is performed on the rotary wheel 21 of the left-hand rotation operating member 11L will be described below.

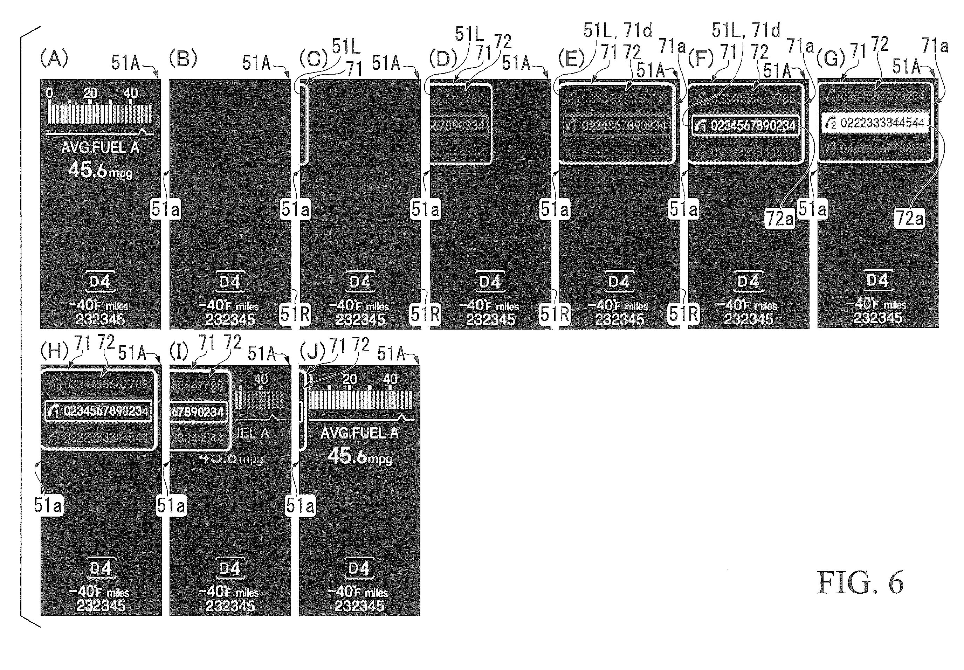

First, for example, as shown in FIG. 6(A), the display control unit 63 displays the present display of displaying various kinds of information, such as fuel consumption per unit travel distance, total travel distance, and shift position, on the display screen 51A of the MID device 51, before the operator performs a predetermined operation on the left-hand rotation operating member 11L.

Next, if the operator performs a predetermined operation on the left-hand rotation operating member 11L, for example, as shown in FIG 6(B), the luminance of the preset display (for example, the display of fuel consumption per unit travel distance) 51a in a region (for example, a peripheral region or the like where the item frame image 71 moves) on the display screen 51A where the item frame image 71 interferes is gradually reduced to a predetermined value or lower. Here, the predetermined operation is the operation of instructing selection of the navigation device 41 that becomes a control target and display of a plurality of operation items (operation menu) set in advance for the navigation device 41.

Next, for example, as sequentially shown in FIG 6(C), FIG. 6(D), and FIG. 6(E), the item frame image 71, and the visually recognizable operation item image 72 of which the luminance, contrast, or color saturation is made to be lower than a specified value are made to move (slide in) toward a predetermined position from the left edge 51L of the display screen 51A, to perform slide display. That is, the item frame image 71 and the operation item image 72 are moved in the direction that goes to a left-hand direction in the right-and-left direction of the display screen 51A, for example, the left edge 51L.
The visually recognizable operation item image 72 of which the luminance, contrast, or color saturation is made to be lower than a specified value is, for example, an image that has the same background color as the background color of the item frame image 71 and has telephone numbers in thin gray.

At this time, the preset display 51a is replaced with the item frame image 71 and the operation item image 72 in a case where the luminance of the preset display 51a is larger than zero, in a region where the item frame image 71 overlaps the preset display 51a, with the movement (slide in) of the item frame image 71 on the display screen 51A. Thereby, the region to be replaced with the item frame image 71 and the operation item image 72 in the preset display 51a increases gradually.

Next, for example, as sequentially shown in FIG. 6(E) and FIG. 6(F), the luminance, contrast, or color saturation of the operation item image 72 is increased to a specified value after the item frame image 71, and the visually recognizable operation item image 72 of which the luminance, contrast, or color saturation is made to be lower than a specified value are stopped at a predetermined position.
Then, after the luminance, contrast, or color saturation of the operation item image 72 has reached a predetermined specified value, for example, as shown in FIG. 6(F) to FIG. 6(J), the same operation as the operation corresponding to FIG. 4(E) to FIG. 4(I) in the above-described embodiment is executed.

According to this second modified example, the operation item image 72 is displayed in a visually recognizable manner even at a timing when the item frame image 71 is slidingly displayed by slide in. Thereby, an operator can be made to recognize what kind of operation menu is associated with the operated left-hand rotation operating member 11L or right-hand rotation operating member 11R at a glance.

In the above-described embodiment, the left end 71d among ends framing the overall image of the operation menu is in contact with the left edge 51L of the display screen 51A. However, the present invention is not limited to this. In addition to the left end 71d of the image 71 among the ends framing the overall image of the operation menu, other ends may be in contact with the peripheral edge of the display screen 51A. However, the other ends are other than the right end 71a on the side opposite the left end 71d side of the image of the operation menu in the movement direction.
Hereinafter, in this third modified example, similarly to the above-described embodiment, for example a case where an operator's predetermined operation is performed on the rotary wheel 21 of the left-hand rotation operating member 11L will be described below.

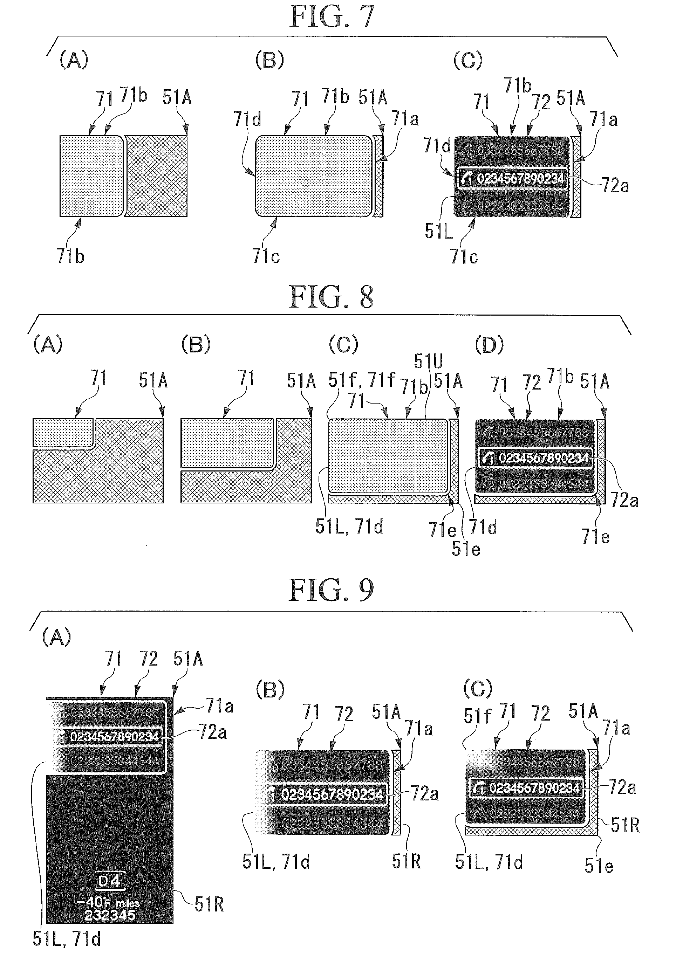

First, for example, as shown in FIG. 7(A) and FIG. 7(B), the display control unit 63 makes only the item frame image 71 of the operation item image 72 and the item frame image 71 of an item frame surrounding operation items, which constitute the image of the operation menu, move (slide in) from the left end 71d of the display screen 51A toward a predetermined position to perform slide display, as an operator's predetermined operation is performed on the left-hand rotation operating member 11L. That is, the item frame image 71 is moved in the direction that goes to a left-hand direction in the right-and-left direction of the display screen 51A, for example, the left edge 51L.
At this time, display is performed so that an upper end 71b and a lower end 71c in the up-and-down direction of the item frame image 71 that form ends in the up-and-down direction among the ends framing the overall image of the operation menu is in contact with the peripheral edge of the display screen 51A.

Then, for example, as shown in FIG. 7(C), the operation item image 72 is displayed after the item frame image 71 is stopped at a predetermined position.
At this time, the item frame image 71 is displayed so that the upper end 71b and the lower end 71c in the up-and-down direction of the item frame image 71 among the ends framing the overall image of the operation menu is in contact with the peripheral edge of the display screen 51A and the item frame image 71 is displayed so that the left end 71d of the item frame image 71 among the ends framing the overall image of the operation menu is in contact with the left edge (peripheral edge) 51L of the display screen 51A.

In addition, in the above-described embodiment, the movement direction in which the image of the operation menu is moved on the display screen 51A is set to the right-and-left direction in correspondence with the relative positional relationship (that is, right and left positions where the display screen 51A is sandwiched from both sides in the right-and-left direction) of the left-hand rotation operating member 11L and the right-hand rotation operating member 11R. The present invention is not limited to this. For example, in a case where the left-hand rotation operating member 11L and the right-hand rotation operating member 11L are arranged at positions where the display screen 51A is sandwiched from both sides in an oblique direction inclined from the right-and-left direction, this oblique direction is set to the movement direction of the image of the operation menu.
Hereinafter, in this fourth modified example, similarly to the above-described embodiment, for example a case where an operator's predetermined operation is performed on the rotary wheel 21 of the left-hand rotation operating member 11L will be described below.

First, for example, as shown in FIG. 8(A) to FIG. 8(C), the display control unit 63 makes only the item frame image 71 of the operation item image 72 and the item frame image 71 surrounding operation items, which constitute the image of the operation menu, move (slide in) from the left edge 51L of the display screen 51A toward a predetermined position to perform slide display, according to an operator's predetermined operation to the left-hand rotation operating member 11L.

That is, the slide-in direction is a direction that goes to an upper left edge in the oblique direction of the display screen 51A.
As shown in FIG. 8(D), the predetermined position is, for example, a position where the gap between an end (lower right end) 71e in a diagonal direction of an upper left end 71 f of the item frame image 71 and a peripheral edge (lower right edge) 51e of the display screen 51A in the oblique direction that is the movement direction is larger than the gap between the upper left end 71f of the item frame image 71 and an upper left edge 51f of the display screen 51A.
In addition, in a case where the gap between the upper left end 71f of the item frame image 71 and the upper left edge 51f of the display screen 51A is zero, display is performed so that the upper end 71b of the item frame image 71 among the ends framing the overall image of the operation menu is in contact with an upper edge 51U of the display screen 51A, and display is performed so that the left end 71d among the ends is in contact with the left edge 51L of the display screen 51A.

In addition, in the above-described embodiment, the end on the predetermined direction side of the image of the operation menu in the movement direction may be displayed by gradation in a state where the image of the operation menu stops at a predetermined position on the display screen.
Hereinafter, in this fifth modified example, similarly to the above-described third embodiment and fourth modified examples, for example a case where an operator's predetermined operation is performed on the rotary wheel 21 of the left-hand rotation operating member 11L will be described below.

First, the display control unit 63 makes only the item frame image 71 of the operation item image 72 and the item frame image 71 surrounding operation items, which constitute the image of the operation menu, move (slide in) from the left edge 51L of the display screen 51A toward a predetermined position to perform slide display, according to an operator's predetermined operation to the left-hand rotation operating member 11L. The slide-in direction is, for example, aright-and-left direction that goes from the left edge 51L of the display screen 51A to the right edge 51R in FIG. 9(A) and FIG. 9(B), and is an oblique direction that goes from the upper left end 51f of the display screen 51A to the lower right end 51e in FIG. 9(C).
Then, for example, as shown in FIG. 9(A) to FIG. 9(C), display is performed that the left end 71d of the operation item image 72 has gradation after the item frame image 71 is stopped at a predetermined position.
In the gradation display, for example, display is performed that luminance increases toward an upper limit or decreases toward a lower limit as it goes to the left end 71d of the operation item image 72.

According to this fifth modified example, the operator can be made to more easily recognize that an image of the operation menu that is currently displayed is displayed by the operation of any of the rotation operating members 11L and 11R.

In addition, in the above-described embodiment, the left-hand rotation operating member 11L and the right-hand rotation operating member 11L are not limited to the rotary switches, and may be other switches.

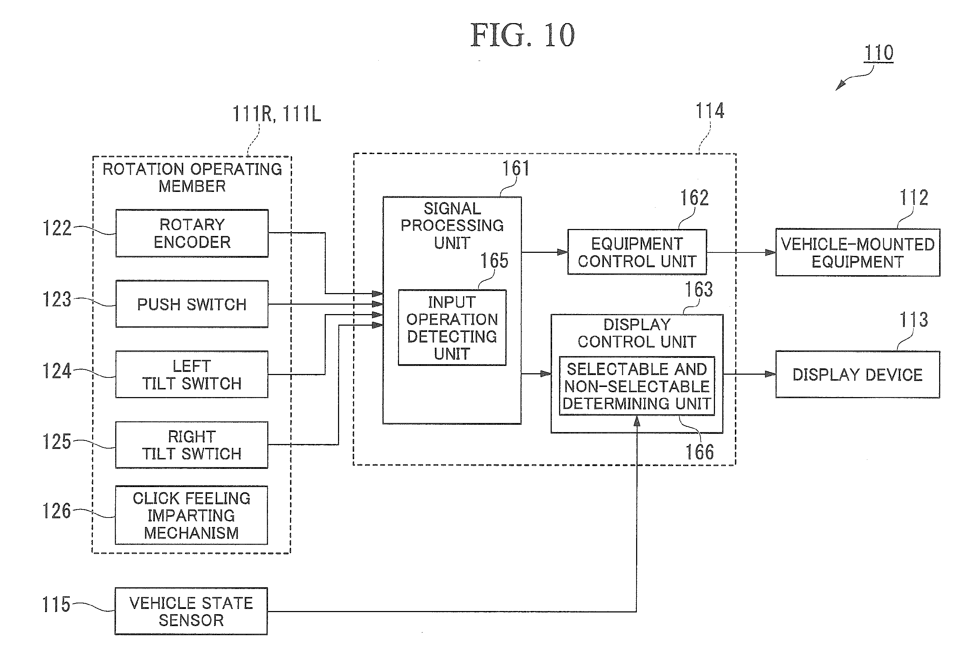

A rotation input device related to a second embodiment of the present invention will be described below, referring to the accompanying drawings.
A rotation input device (operating device for a vehicle) 110 according to the present embodiment is mounted on a vehicle, for example, and as shown in FIG. 10, is configured to include rotation operating members 111R and 111L that are capable of being operated by an operator, vehicle-mounted equipment 112, a display device 113, and a processing device 114, and a vehicle state sensor 115.

The rotation operating members 111R and 111L are, for example, are rotary switches including rotary wheels 121 capable of performing a push operation and a tilt operation in addition to a rotation operation. The rotation operating members 111R and 111L are configured to include a rotary encoder 122, a push switch 123, a left tilt switch 124, and a right tilt switch 125.

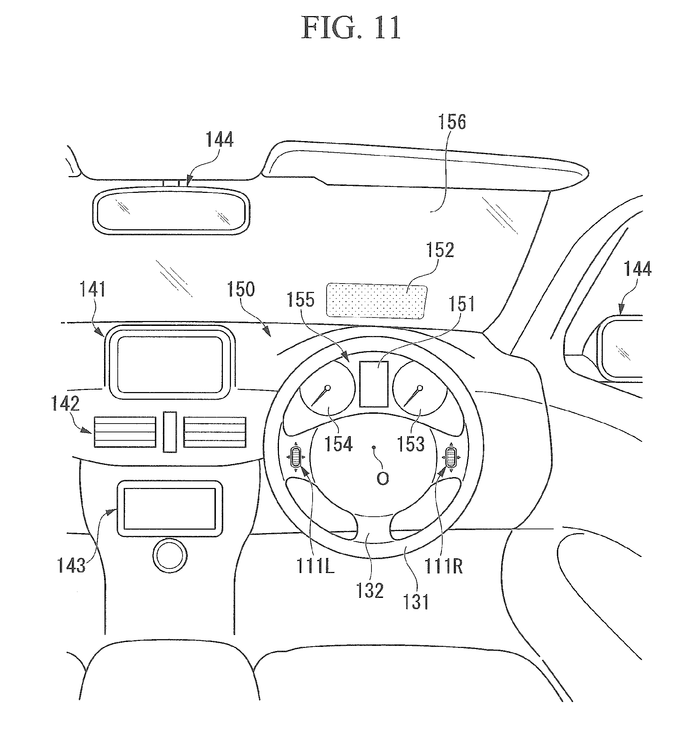

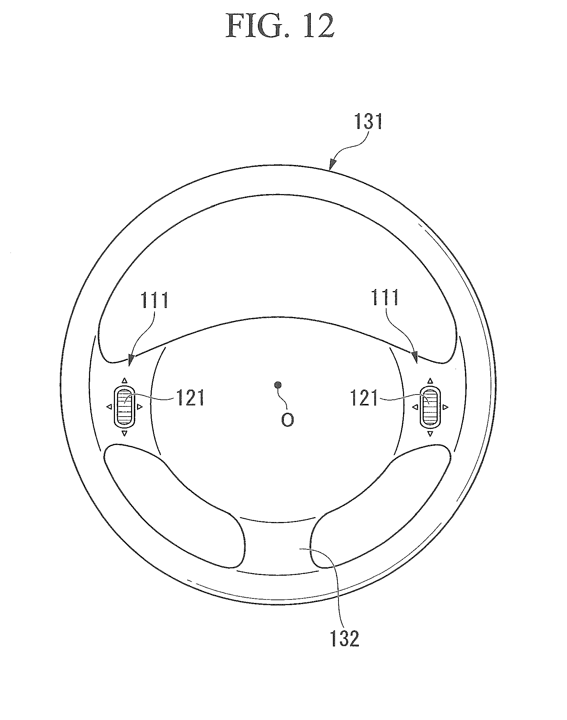

As shown in FIGS. 11 and 12, the rotation operating members 111R and 111L are, for example, so-called steering switches that are arranged at left-hand and right-hand positions (for example, positions that are symmetrical with respect to a rotational axis O) of the rotational axis O of a steering wheel 131 in a spoke part 132 of the steering wheel 131 at a neutral position (that is, a position in the straight-ahead state of a vehicle). Also, the rotation operating members are arranged within a positional range where the members can be operated by the fingers (for example, thumbs or the like) of the right and left hands of a driver who has gripped the steering wheel 131.

Portions of the outer peripheral portions of the rotary wheels 121 of the rotation operating members 111R and 111L protrude toward the outside (that is, toward the driver) from the surface of the spoke part 132, and the operator can operate the rotary wheels 121 with his/her fingers. The rotary wheels 121 are configured so as to be, for example, rotatable in the up-and-down direction of the steering wheel 131 at the neutral position, tiltable in the right-and-left direction of the steering wheel 131 at the neutral position, and pushable in the direction of rotational axis O.

The rotary encoder 122, for example, outputs a signal according to the rotational displacement, rotational angle, and rotational direction of the rotary wheel 121.
The push switch 123 outputs a signal according to the presence/absence of a push operation to the rotary wheel 121.
The left tilt switch 124 outputs a signal according to the presence/absence of a leftward tilt operation to the rotary wheel 121.
The right tilt switch 125 outputs a signal according to the presence/absence of a rightward tilt operation to the rotary wheel 121.

Also, the rotation operating members 111R and 111L include a click feeling imparting mechanism that imparts a click feeling at every predetermined angle in a rotation operation direction with respect to a rotation operation to the rotary wheel 121.
The click feeling imparting mechanism 126, for example, is configured to include a click pin (not shown) and a projection member (not shown). The click pin is provided at main bodies (not shown) of the rotation operating members 111R and 111L that rotatably support the rotary wheels 121 and is capable of being elastically deformed and elastically returned. A projection member is provided on the rotary wheel 121, comes into contact with the click pin with the rotation of the rotary wheel 121 at every predetermined angle, and elastically deforms the click pin.
That is, according to this click feeling imparting mechanism 126, the projection member comes into contact with the click pin with the rotation of the rotary wheel 121 at every predetermined angle, and the click pin is elastically deformed. At this time, a click feeling originating from the elastic force of the click pin is imparted to the rotary wheel 121. If the abutment between the projection member and the click pin is released by the elastic deformation of the click pin, the click pin is elastically returned. When the rotary wheel 121 rotates by every predetermined angle further, the projection member abuts against the click pin.

The vehicle-mounted equipment 112 is, for example, a navigation device 141, an air conditioner 142, an acoustic device 143, a mirror angle adjusting device 144 that adjusts the angle of a room mirror or a rearview mirror, a lighting device (not shown), a wiper (not shown), a dew condensation removing device (not shown), a drive assist device (not shown), a traveling safety device (not shown), or the like.

The display device 113 is, for example, an MID (Multi-Information Display) device 151, a HUD (Head-Up Display) device 152, or the like that is arranged at an instrument panel 150. The display device 113 is arranged so that the position thereof in the right-and-left direction of the vehicle becomes a position between the right-hand and left-hand rotation operating members 111R and 111L when viewed from the driver who has sat down on a driver's seat.

In addition, the MID device 151 is, for example, a liquid crystal display device that is arranged at the central portion of a meter panel part 155 including meters and gauges, such as a vehicle speedometer 153 and an engine rpm meter 154, which are provided at the instrument panel 150 ahead of the driver's seat. Various kinds of vehicle information, including the travel distance of the vehicle, temperatures inside and outside a vehicle interior, fuel consumption information, the state of the vehicle, and the like, are displayed on the MID device 151.

Additionally, the HUD device 152, for example, projects and displays an image (for example, images, such as various kinds of vehicle information) on a portion of a windshield 156 ahead of the driver's seat, or displays as a virtual image an image (for example, images, such as various kinds of vehicle information) above the instrument panel 150 ahead of the driver's seat.

The vehicle state sensor 115, for example, is configured to include a speed sensor that detects the speed of a vehicle, a shift position switch that outputs a signal according to the shift position, a brake-pedal switch, a parking brake switch, or the like.

The processing device 114, for example, is configured to include a signal processing unit 161, an equipment control unit 162, and a display control unit 163.

The signal processing unit 161 acquires signals output from the rotary encoder 122 and the respective switches 123 to 125 of the rotation operating members 111R and 111L, and detects operator's input operations to the respective rotation operating members 111R and 111L. The signal processing unit 161 outputs the signals of the detection results to the equipment control unit 162 and the display control unit 163.
The signal processing unit 161, for example, is configured to include an input operation detecting unit 165.

The input operation detecting unit 165, for example, detects the rotational displacement, rotational angle, and rotational direction of the rotary wheels 121 on the basis of the signal output from the rotary encoder 122. The input operation detecting unit 165 detects the presence or absence of a push operation and a tilt operation in the right-and-left direction to the rotary wheels 121, on the basis of the signals output from the respective switches 123 to 125, and the signals of the detection results are output to the equipment control unit 162 and the display control unit 163.

The equipment control unit 162 outputs a command signal for controlling the operation of the vehicle-mounted equipment 112, according to the signals output from the input operation detecting unit 165.
The display control unit 163 outputs a command signal for controlling the operation of the display device 113, according to a signal output from the vehicle state sensor 115 and a signal output from the input operation detecting unit 165.

The display control unit 163, for example, controls the scrolling display of a plurality of items on the display screen of the display device 113, according to an operator's predetermined rotation operation (for example, a rotation operation that the rotary wheel 121 rotates by a predetermined angle at which a single click feeling is produced, or the like) to the rotary wheels 121 of the rotation operating members 111R and 111L. Here, the predetermined rotation operation is, for example, a rotation operation that the rotary wheel 121 rotates by a predetermined angle at which a single click feeling is produced, or the like.
When a certain item of a plurality of items stops at a predetermined selection position in a predetermined display state, the display (for example, addition of frame display surrounding an item, highlighting that changes luminance, contrast, or color saturation, or the like) showing that the stopped item is selected is performed. The predetermined display state is, for example, a display state where the luminance, contrast, or color saturation of an item is set to a predetermined specified value.
Also, the display control unit 163, for example, is configured to include a selectable and non-selectable determining unit 166.

For example, the selectable and non-selectable determining unit 166 determines whether or not an adjacent item, which is present in a scrolling direction corresponding to the rotational direction of the rotary wheels 121 of the rotation operating members 111R and 111L among adjacent items that are items adjacent to an item displayed at a predetermined selection position of the display screen of the display device 113, is in a selectable state, and outputs a signal of the determination result.
For example, the selectable and non-selectable determining unit 166 stores, in advance, data such as a map in which selectable or non-selectable is associated with each of a plurality of items displayed by scrolling on the display screen of the display device 113, according to the state of the vehicle detected by the vehicle state sensor 115. Also, the selectable and non-selectable determining unit searches this data on the basis of a signal output from the vehicle state sensor 115, and determines whether each item is selectable or non-selectable. The state of the vehicle is, for example, whether or not a vehicle is traveling, whether or not the shift position is a parking position, or the like.

Also, in a case where an adjacent item is determined by the selectable and non-selectable determining unit 166 to be selectable when the rotary wheel 121 has rotated by a predetermined angle, the display control unit 163 performs the scrolling display control of stopping the adjacent item at a predetermined selection position of the display screen of the display device 113.

Additionally, in a case where an adjacent item is determined by the selectable and non-selectable determining unit 166 to be non-selectable when the rotary wheel 121 has rotated by a predetermined angle, the display control unit 163 makes a first adjacent item pass through a predetermined selection position of the display screen of the display device 113 in a visually recognizable display state.
The display control unit 163 performs a control so that, when an adjacent item is displayed on a selection position, a first adjacent item that the selectable and non-selectable determining unit 166 has determined to be non-selectable is brought into a display state that is visually different from a second adjacent item that the selectable and non-selectable determining unit 166 has determined to be selectable.
At this time, the first adjacent item determined by the selectable and non-selectable determining unit 166 to be non-selectable may be made to pass through the selection position simply or may be made to pass through the selection position after being stopped at the selection position for a predetermined time. The visually different display state is, for example, a display state where the luminance, contrast, or color saturation of the first adjacent item is made to be lower than a specified value.
First, items that are present adjacent to each other sequentially in the scrolling direction are referred to as sequential adjacent items. The sequential adjacent items are sequentially made to pass through the selection position in a visually recognizable display state until any of the sequential adjacent items is determined by the selectable and non-selectable determining unit 166 to be selectable from an adjacent item that passes through the selection position. The display control unit 163 performs the scrolling display control of stopping a sequential adjacent item that the selectable and non-selectable determining unit 166 has determined to be selectable, at the selection position.

The first scrolling speed is a speed at which the item that is displayed on the selection position moves from the selection position, and the first adjacent item determined by the selectable and non-selectable determining unit 166 to be non-selectable passes through the selection position and moves to the selection position. The second scrolling speed is a speed at which the item that is displayed on the selection position moves from the selection position, and the second adjacent item determined by the selectable and non-selectable determining unit 166 to be selectable stops at the selection position and moves to the selection position. The display control unit 163 performs a scrolling display control so that the second scrolling speed becomes faster than the first scrolling speed.

The rotation input device 110 according to the present second embodiment includes the above configuration. Next, the operation of the rotation input device 110, particularly the operation of the display control unit 163 will be described.

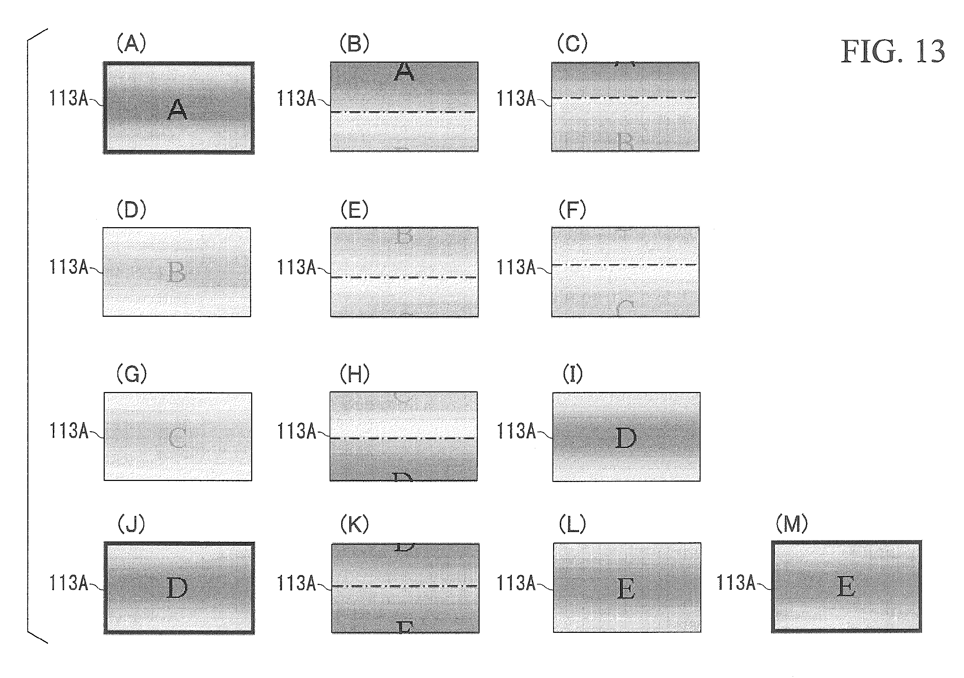

In addition, for example a case where an operator's rotation operation is performed on the rotary wheels 121 of the rotation operating members 111R and 111L will be described below.
In this case, for example, as shown in FIG. 13 (A) to FIG. 13(M), a plurality of items is displayed by scrolling at a predetermined selection position 113A of the display screen of the display device 113, and any item of the plurality of items is stopped at the predetermined selection position 113A, whereby it is displayed that the item is selected.

First, before an operator's predetermined rotation operation is performed on the rotation operating members 111R and 111L (for example, a rotation operation that the rotary wheel 121 rotates by a predetermined angle at which a single click feeling is produced or the like), as shown in FIG. 13A, the display control unit 163, for example, stops a proper item (A) determined by the selectable and non-selectable determining unit 166 to be selectable, at the predetermined selection position 113A of the display screen of the display device 113, to perform predetermined highlighting. Thereby, a standby state displaying that the item (A) is selected is maintained. Here, the item (A) is an item determined by the selectable and non-selectable determining unit 166 to be selectable.

Next, an operator performs a predetermined rotation operation (for example, a rotation operation that the rotary wheel 121 rotates by a predetermined angle at which a single click feeling is produced, or the like) on the rotation operating members 111R and 111L. As sequentially shown in FIG. 13 (B) and FIG. 13(C), for example, an adjacent item (B) is moved and displayed by scrolling. The adjacent item (B) is an item that is present adjacent to the item (A) in the scrolling direction (for example, the up-and-down direction of the display screen) corresponding to the rotation operation direction of the rotary wheel 121.

At this time, the selectable and non-selectable determining unit 166 determines that the adjacent item (B) is non-selectable, for example, due to an event that a vehicle speed sensor of the vehicle state sensor 115 has detected a speed equal to or higher than a predetermined value and that a vehicle is being traveling, or the like. The speed (scrolling speed) at which the adjacent item (B) is moved by scrolling is set to the first scrolling speed. Moreover, the luminance, contrast, or color saturation of the adjacent item (B) is made to be lower than a specified value.

Then, for example, as sequentially shown in FIG. 13(D), FIG. 13(E), and FIG. 13(F), the adjacent item (B) is made to pass through the selection position 113Ain a visually recognizable display state. Along with this, an adjacent item (C) that is present adjacent to the adjacent item (B) in the scrolling direction (for example, the up-and-down direction of the display screen) corresponding to the rotation operation direction of the rotary wheel 121 is moved and displayed by scrolling.

For example, if the selectable and non-selectable determining unit 166 determines that the adjacent item (C) is non-selectable when the adjacent item (B) passes through the selection position 113A, the first scrolling speed is set at a timing after the adjacent item (B) has passed through the selection position 113A. Moreover, the luminance, contrast, or color saturation of the adjacent item (B) is made to be lower than a specified value.
The first scrolling speed is a scrolling speed at which the adjacent item (C) is moved by scrolling at a timing after the adjacent item (B) has passed through the selection position 113A.

Then, for example, as sequentially shown in FIG. 13(G) and FIG. 13(H), the adjacent item (C) is made to pass through the selection position 113A in a visually recognizable display state. Along with this, an adjacent item (D) that is present adjacent to the adjacent item (C) in the scrolling direction (for example, the up-and-down direction of the display screen) corresponding to the rotation operation direction of the rotary wheel 121 is moved and displayed by scrolling.

For example, if the selectable and non-selectable determining unit 166 determines that the adjacent item (D) is selectable when the adjacent item (C) passes through the selection position 113A, the second scrolling speed is set at a timing after the adjacent item (C) has passed through the selection position 113A. Moreover, the luminance, contrast, or color saturation of the adjacent item (D) is set to a specified value.
The second scrolling speed is faster than the first scrolling speed that is a scrolling speed at which the adjacent item (D) is moved by scrolling.

Then, as shown in FIG. 13(I), the adjacent item (D) is made to stop at the selection position 113A. Next, as shown in FIG 13(J), shifting to a standby state displaying that the adjacent item (D) is selected is made by performing predetermined highlighting on the adjacent item (D).

Next, if an operator performs predetermined rotation operations (for example, rotation operation in that the rotary wheel 121 rotates by a predetermined angle at which a single click feeling is produced, or the like.), to the rotation operating members 111R and 111L, for example, as sequentially shown in FIG. 13 (K), an adjacent item (E) is moved and displayed by scrolling. The adjacent item (E) is an item that is present adjacent to the adjacent item (D) in the scrolling direction (for example, the up-and-down direction of the display screen) corresponding to the rotation operation direction of the rotary wheel 121.

At this time, for example, if the selectable and non-selectable determining unit 166 determines that the adjacent item (E) is selectable, the second scrolling speed is set, and the luminance, contrast, and color saturation of the adjacent item (E) is set to a specified value. The second scrolling speed is faster than the first scrolling speed that is a scrolling speed at which the adjacent item (E) is moved by scrolling.

Then, for example, as shown in FIG. 13 (L), the adjacent item (E) is made to stop at the selection position 113A. Next, for example, as shown in FIG. 13(M), shifting to a standby state displaying that the adjacent item (E) is selected is made by performing predetermined highlighting on the adjacent item (E).

As described above, according to the rotation input device 110 according to the present embodiment, an operator can be made to visually recognize a non-selectable item without subsampling when a plurality of items is displayed by scrolling. Moreover, a non-selectable item can be passed only by a predetermined angle of rotation operation that imparts a single click feeling to the rotation operating members 111R and 111L, and then, a selectable item can be automatically scrolled to the selection position. Therefore, operativity can be improved.

Moreover, an item that the selectable and non-selectable determining unit 166 has determined to be non-selectable and an item determined by the selectable and non-selectable determining unit to be selectable are brought into visually different display states. Thereby, the contents of the non-selectable item can be more easily visually recognized, an operator can be made to instantaneously recognize that the item that has passed through the selection position is non-selectable, and convenience can be improved.
Moreover, the scrolling speed at which the non-selectable item is scrolled is slow compared to the scrolling of the selectable item. Thereby, while securing the time for which the contents of the non-selectable item can be visually recognized, the movement time to the next selectable item degree can be shortened, and convenience can be improved.

In addition, in the above-described second embodiment, the equipment control unit 162 may control scrolling speed such that the scrolling time that is required for the scrolling between items determined by the selectable and non-selectable determining unit 166 to be selectable becomes constant irrespective of whether or not an item (non-selectable item) determined by the selectable and non-selectable determining unit 166 to be non-selectable is present.
For example, the equipment control unit 162 makes an item (first selectable item), which is determined by the selectable and non-selectable determining unit 166 to be selectable and is displayed at the selection position, moved from the selection position. Next, the scrolling speed is controlled such that the scrolling time that is required until an item (second selectable item) determined by the selectable and non-selectable determining unit 166 to be selectable is made to move to the selection position becomes constant irrespective of whether or not an item (non-selectable item) determined by the selectable and non-selectable determining unit 166 to be non-selectable is present between the first selectable item and the second selectable item.

For example, the equipment control unit 162 sets a scrolling speed Va and a scrolling time Ta, with respect to the scrolling from the first selectable item to the second selectable item in a case where there is no a non-selectable item.
Also, for example, in a case where one non-selectable item is present between the first selectable item and the second selectable item, a first scrolling speed Vb1 and a first scrolling time Tb1 are set with respect to the scrolling from the first selectable item to the non-selectable item, and a second scrolling speed Vb2 and a second scrolling time Tb2 are set with respect to the scrolling from the non-selectable item to the second selectable item.
Here, since the second scrolling speed Vb2 is faster than the first scrolling speed Vb1 as described above, Va < Vb1 < Vb2 is established, and since the scrolling time from the first selectable item to the second selectable item is constant, Ta = Tb1 + Tb2 is established.

In addition, in the above-described embodiment, the rotation input device 110 may be mounted on other equipment other than the vehicle.

Additionally, another aspect related to the operating device for a vehicle may include: display means that displays a plurality of items by scrolling, and performs the display showing that a selection item is selected when the selection item selected among the plurality of items stops at a predetermined selection position in a predetermined display state; operating means that rotate to operate the plurality of items; control means that controls the scrolling display of the display means according to the rotation of the operating means; and selectable and non-selectable determining means that determines whether or not an adjacent item that is present in a scrolling direction corresponding to a rotational direction of the operating means, among adjacent items adjacent to the item that is displayed at the selection position, is in a selectable state, wherein the operating means has a click feeling imparting mechanism that imparts a click feeling at every predetermined angle of the rotation, wherein when the operating means has rotated by the predetermined angle, the control means makes a first adjacent item determined by the selectable and non-selectable determining means to be selectable stopped at the selection position and make a second adjacent item determined by the selectable and non-selectable determining means to be non-selectable pass through at the selection position in a visually recognizable display state, makes the sequential adjacent items sequentially pass through the selection position in a visually recognizable display state until any of the sequential adjacent items that are present adjacent to each other sequentially in the scrolling direction from the second adjacent item passing through the selection position is determined by the selectable and non-selectable determining means to be selectable, and makes the sequential adjacent item determined by the selectable and non-selectable determining means to be selectable stop at the selection position.
Additionally, as still another aspect related to the operating device for a vehicle, when the second adjacent item passes through the selection position of the display means, the control means may perform the scrolling display control of making the sequential adjacent item adjacent to the first adjacent item displayed at the selection position by scrolling after the first adjacent item is made to stop at the selection position for a predetermined time in a display state that is visually different from the second adjacent item.
Additionally, as still further aspect related to the operating device for a vehicle, the control means may control the scrolling display so that a second scrolling speed at which the item that is displayed at the selection position moves from the selection position, and the first adjacent item stops at the selection position and moves to the selection position is faster than a first scrolling speed at which the item that is displayed at the selection position moves from the selection position, and the second adjacent item passes through the selection position and moves to the selection position.

### Reference Signs List

10: OPERATING DEVICE FOR VEHICLE
11L: LEFT-HAND ROTATION OPERATING MEMBER (SWITCH)
11R: RIGHT-HAND ROTATION OPERATING MEMBER (SWITCH)
12: VEHICLE-MOUNTED EQUIPMENT
13: DISPLAY DEVICE
14: PROCESSING DEVICE
31: STEERING WHEEL
51A: DISPLAY SCREEN
63: DISPLAY CONTROL UNIT (DISPLAY CONTROL DEVICE)
110: ROTATION INPUT DEVICE (OPERATING DEVICE FOR VEHICLE)
111R, 111L: ROTATION OPERATING MEMBER (OPERATING MEANS)
112: VEHICLE-MOUNTED EQUIPMENT
113: DISPLAY DEVICE (DISPLAY MEANS)
114: PROCESSING DEVICE
115: VEHICLE STATE SENSOR
163: DISPLAY CONTROL UNIT (CONTROL MEANS)
166: SELECTABLE AND NON-SELECTABLE DETERMINING UNIT (SELECTABLE AND NON-SELECTABLE DETERMINING MEANS)

## Claims

1. An operating device for a vehicle comprising:
a vehicle-mounted equipment that is mounted on a vehicle and has an operation menu;
a display screen that displays an image of the operation menu;
a plurality of switches that is arranged in a vehicle interior and operates the operation menu; and
a display control device that displays the image so that the image stops at a predetermined position after the image is made to move on the display screen from a first peripheral edge of the display screen toward the predetermined position according to the operation of any of the plurality of switches,
wherein the first peripheral edge is set so as to correspond to a relative positional relationship in which the plurality of switches is arranged, and
wherein the predetermined position is set so that a gap between a second end opposite a first end of the image and a second peripheral edge of the display screen in a movement direction of the image becomes larger than a gap between the first end of the image and the first peripheral edge of the display screen in the movement direction of the image, in a state where the image stops at the predetermined position on the display screen.

2. The operating device for a vehicle according to Claim 1,
wherein a position of the first end of the image of the operation menu and a position of the first peripheral edge of the display screen are the same in a state where the image stops at the predetermined position on the display screen.

3. The operating device for a vehicle according to Claim 1,
wherein the image of the operation menu is displayed so that only the first end among ends framing the overall image of the operation menu is in contact with the first peripheral edge of the display screen, in a state where the image stops at the predetermined position on the display screen.

4. The operating device for a vehicle according to Claim 1,
wherein the plurality of switches includes a left-hand steering switch provided on the left side of a rotational axis of a steering wheel provided in the vehicle interior, and a right-hand steering switch provided on a right side of the rotational axis of the steering wheel,
wherein the first end is set at a left end of the display screen when the left-hand steering switch is operated, and
wherein the first end is set at a right end of the display screen when the right-hand steering switch is operated.

5. The operating device for a vehicle according to Claim 1,
wherein the image includes an operation item image and an item frame image surrounding the operation item image, and
wherein when the image is made to be displayed on the display screen, the display control device makes only the item frame image of the image move from the first peripheral edge of the display screen toward the predetermined position, and makes the operation item image displayed after the item frame image stops at the predetermined position.

## Amended claims

### Amended claims under Art. 19.1 PCT

**1.** (Amended)
An operating device for a vehicle comprising:
a vehicle-mounted equipment that is mounted on a vehicle and has an operation menu;
a display screen that displays an image of the operation menu;
a left-hand steering switch arranged on a steering wheel provided in a vehicle interior to operate the operation menu and provided on the left side of a rotational axis of the steering wheel;
a right-hand steering switch arranged on the steering wheel to operate the operation menu and provided on the right aide of the rotational axis of the steering wheel; and
a display control device that displays the image so that the image stops at a predetermined position after the image is made to move on the display screen from a first peripheral edge of the display screen toward the predetermined position according to the operation of either the left-hand steering switch or the right-hand steering switch,
wherein the first peripheral edge is set so as to correspond to a relative positional relationship in which the left-hand steering switch and the right-hand steering switch are arranged,
wherein the predetermined position is set so that a gap between a second end opposite a first end of the image and a second peripheral edge of the display screen in a movement direction of the image becomes larger than a gap between the first end of the image and the first peripheral edge of the display screen in the movement direction of the image, in a state where the image stops at the predetermined position on the display screen,
wherein the first end is set at a left end of the display screen in a case where the left-hand steering switch is operated,
wherein the first end is set at a right end of the display screen in a case where the right-hand steering switch is operated, and
wherein the display screen is arranged so that the position thereof in the right-and-left direction of the vehicle as viewed from a driver becomes a position between the left-hand steering switch and the right-hand steering switch.

**2.** (New) The operating device for a vehicle according to Claim 1,
the display screen is arranged at an instrument panel of the vehicle.

**3.** (Amended)
*Original Claim 2*

**4.** (Amended)
*Original Claim 3*

**5.** (Unchanged)

Statement under Art. 19.1 PCT
In Claim 1, we amend the term "a plurality of switches" to the term "a left-hand steering switch arranged on a steering wheel provided in a vehicle interior to operate the operation menu and provided on the left side of a rotational axis of the steering wheel; a right-hand steering switch arranged on the steering wheel to operate the operation menu and provided on the right aide of the rotational axis of the steering wheel". Furthermore, we limit claim 1 by the terms
i) the first end is set at a left end of the display screen in a case where the left-hand steering switch is operated,
ii) the first end is set at a right end of the display screen in a case where the right-hand steering switch is operated, and
iii) the display screen is arranged so that the position thereof in the right-and-left direction of the vehicle as viewed from a driver becomes a position between the left-hand steering switch and the right-hand steering switch. These amendments are based on the paragraphs [0020] and [0024], no new subject matter has been introduced into the disclosure by the present amendments.

In association with these amendments, Original Claim 4 is deleted.

Accordingly, in a case where the switches are symmetrically attached to the steering wheel, an operator can more intuitively grasp whether the image of the operation menu that is displayed on the display screen is displayed by operating a certain switch, and the operativity improves further.

New claim 2 is based on the paragraph [0024], no new subject matter has been introduced into the disclosure by the present amendments.

The amended claim 3 is Original Claim 2, and the amended Claim 4 is Original Claim 3.
